# EUROPÄISCHE PATENTSCHRIFT

(11) **EP 3 625 676 B1**
(45) Veröffentlichungstag und Bekanntmachung des Hinweises auf die Patenterteilung: **18.05.2022**
(21) Anmeldenummer: 18734455.1
(22) Anmeldetag: 13.06.2018
(51) Int. Cl.: G06F 8/33

(54) **VERFAHREN ZUR UNTERSTÜTZUNG EINES ANWENDERS BEI EINER ERSTELLUNG EINER SOFTWARE-APPLIKATION UND COMPUTERPROGRAMM MIT EINER IMPLEMENTATION DES VERFAHRENS SOWIE IM RAHMEN EINES SOLCHEN VERFAHRENS VERWENDBARE PROGRAMMIERSCHNITTSTELLE**
METHOD FOR SUPPORTING A USER IN THE CREATION OF A SOFTWARE APPLICATION AND COMPUTER PROGRAM USING AN IMPLEMENTATION OF THE METHOD AND PROGRAMMING INTERFACE WHICH CAN BE USED IN SUCH A METHOD
PROCÉDÉ D'ASSISTANCE D'UN UTILISATEUR LORS D'UNE CRÉATION D'UNE APPLICATION LOGICIELLE ET PROGRAMME INFORMATIQUE COMPRENANT UNE MISE EN UVRE DU PROCÉDÉ ET INTERFACE PROGRAMMABLE POUVANT ÊTRE UTILISÉE DANS LE CADRE D'UN TEL PROCÉDÉ

(30) Priorität: 10.07.2017 EP 17180475
(43) Veröffentlichungstag der Anmeldung: 25.03.2020
(73) Patentinhaber: Mendix Technology B.V., 3072 AP Rotterdam (NL)
(72) Erfinder: SELLE, Sven, 90489 Nürnberg (DE)
(74) Vertreter: Maier, Daniel Oliver
(86) Internationale Anmeldenummer: PCT/EP2018/065585
(87) Internationale Veröffentlichungsnummer: WO 2019/011559

(56) Entgegenhaltungen:
- US-A1- 2016 197 798

## Beschreibung

Die Erfindung betrifft zuvorderst ein Verfahren zur Unterstützung eines Anwenders zum Beispiel bei einer Erstellung einer im Folgenden kurz als Applikation bezeichneten Software-Applikation, welche für einen Zugriff auf IoT-Daten (Internet of Things-Daten) bestimmt ist, nämlich einer Applikation, welche für einen Zugriff auf die IoT-Daten zumindest eine Funktion einer Mehrzahl von im Rahmen einer Programmierschnittstelle (API; Application Programming Interface) zur Verfügung stehenden Funktionen verwendet. Im Weiteren betrifft die Erfindung auch ein Computerprogramm mit einer Implementation des Verfahrens.

Programmierschnittstellen der eingangs genannten Art sind grundsätzlich an sich bekannt, aber oftmals komplex und umfangreich, sodass deren Benutzung eher für geübte Programmierer in Betracht kommt und auch geübte Programmierer nur bei einer häufigen Verwendung der Programmierschnittstelle eine annähernd vollständige Übersicht über den Leistungsumfang der Programmierschnittstelle haben.

Aus der US 2016/197798 A1 ist bereits ein Verfahren zum Sammeln von Benutzerdaten und Benutzerverhalten innerhalb eines IoT-Systems bekannt. Das Verfahren sieht eine lokale Kommunikationsschnittstelle zur kommunikativen Kopplung des IoT-Hubs mit einer Vielzahl von IoT-Geräten vor.

Eine erste Aufgabe der Erfindung besteht entsprechend darin, einen im Folgenden als Anwender bezeichneten Programmierer, also auch eine Person, die im Vergleich zu einem IT-Experten normalerweise über weniger Wissen und Erfahrung verfügt, bei der Erstellung einer Applikation für einen Zugriff auf IoT-Daten sinnvoll und merklich zu unterstützen.

Diese Aufgabe wird erfindungsgemäß mittels eines Verfahrens mit den Merkmalen des unabhängigen Verfahrensanspruchs gelöst. Dazu ist bei einem Verfahren zur Unterstützung eines Anwenders bei einer Erstellung einer Applikation, welche für einen Zugriff auf IoT-Daten bestimmt ist, Folgendes vorgesehen: Die Applikation ist für einen Zugriff auf im Folgenden mitunter auch nur kurz als Daten bezeichnete IoT-Daten bestimmt. Der Zugriff auf die IoT-Daten erfolgt im Rahmen der Applikation mittels einzelner oder mehrerer von einer Programmierschnittstelle umfasster Funktionen. Bei einer Erstellung der Applikation oder im Zusammenhang mit der Erstellung der Applikation werden für den Anwender charakteristische Benutzerdaten und Verhaltensdaten aufgenommen und/oder erzeugt. Ein in Software implementiertes Werkzeug wertet bei der Erstellung der Applikation automatisch die Benutzerdaten und/oder die Verhaltensdaten aus. Als Ergebnis der Auswertung der Benutzerdaten und der Verhaltensdaten erzeugt das Werkzeug einen Vorschlag für zumindest eine Funktion der Programmierschnittstelle, die für den Anwender und die Applikation relevant sein könnte. Dieser Vorschlag wird dem Anwender angezeigt. Optional ist im Rahmen der Anzeige die vorgeschlagene Funktion oder eine vorgeschlagene Funktion aus einer Gruppe von mehreren vorgeschlagenen Funktionen unmittelbar zur Verwendung in der jeweiligen Applikation auswählbar. Der Vorschlag zumindest einer für den Anwender potenziell relevanten Funktion und deren Anzeige ist die im Rahmen des Verfahrens erfolgende Unterstützung des Anwenders bei der Erstellung der jeweiligen Applikation.

Der Vorteil dieses Aspekts der Erfindung besteht darin, dass eine benutzerspezifische Unterstützung erfolgt und diese damit zumindest tendenziell den Bedürfnissen oder auch Vorlieben des Anwenders Rechnung trägt.

Eine weitere Aufgabe der Erfindung besteht darin, eine insbesondere zur Verwendung im Rahmen des Verfahrens besonders geeignete Programmierschnittstelle anzugeben. Diese Aufgabe wird mittels einer Programmierschnittstelle mit den Merkmalen des Anspruchs 1 gelöst. Bei einer solchen Programmierschnittstelle, welche Funktionen zum Zugriff auf IoT-Daten umfasst und verfügbar macht, ist vorgesehen, dass beim Erstellen einer Applikation, welche eine Funktion der Programmierschnittstelle verwendet, und/oder beim Verwenden einer Applikation, welche eine Funktion der Programmierschnittstelle verwendet, diesbezügliche charakteristische Daten - also die Verwendung der jeweiligen Funktion kodierende Daten - gespeichert werden. Bei diesen Daten handelt es sich zumindest um hier und im Folgenden als Verhaltensdaten bezeichnete Daten, optional um Benutzerdaten und solche Verhaltensdaten. Die Verhaltensdaten kodieren zum Beispiel ein Verhalten eines Programmierers, das zum Beispiel darin besteht, eine bestimmte Funktion der Programmierschnittstelle auszuwählen und in einer Applikation zum Zugriff auf IoT-Daten vorzusehen. Die Benutzerdaten kodieren zum Beispiel besondere Eigenschaften eines jeweiligen Benutzers. Bei einer optionalen zusätzlichen Erfassung solcher Benutzerdaten wird gewissermaßen auch gespeichert, "wer" eine bestimmte Funktion der Programmierschnittstelle benutzt, wobei "wer" nicht notwendig eine bestimmte Person (Anwender, Benutzer) meint, sondern sich genauso auf eine Eigenschaft der Person beziehen kann (Programmierer, Entwickler etc.). Details zu einem exemplarischen Umfang der Benutzer- und Verhaltensdaten finden sich weiter unten in der Beschreibung. Bei einer Verwendung einer Applikation wird in Form der Verhaltensdaten zum Beispiel erfasst, mit welchen Parametern eine Funktion der Programmierschnittstelle aufgerufen wurde, also zum Beispiel auf welchen Datenbereich der IoT-Daten sich der Aufruf bezieht. Die Besonderheit der Programmierschnittstelle besteht neben der automatischen Erfassung solcher Daten darin, dass die Programmierschnittstelle eine spezielle Funktion (Benutzerabgleichsfunktion) umfasst, welche zumindest die Verhaltensdaten für einen Anwender der Programmierschnittstelle verfügbar macht.

Der Vorteil dieses Aspekts der Erfindung besteht darin, dass das Speichern zumindest der Verhaltensdaten, optional das Speichern von Benutzer- und/oder Verhaltensdaten, auf der Ebene der Programmierschnittstelle sowie die Zugriffsmöglichkeit zumindest auf die Verhaltensdaten ebenfalls auf der Ebene der Programmierschnittstelle, nämlich mittels der Benutzerabgleichsfunktion, an einer zentralen Stelle erfolgt bzw. gegeben ist. Die Verwendbarkeit zumindest der Verhaltensdaten ist damit unabhängig zum Beispiel von einer zum Erstellen einer Applikation bestimmten Entwicklungsumgebung oder dergleichen, mittels derer eine solche Datenerfassung und Zugriffsmöglichkeit grundsätzlich ebenfalls realisierbar ist. Verhaltensdaten oder dergleichen eines Programmierers, die im Rahmen einer Erstellung einer Applikation entstanden sind, können damit auch für die automatische Erzeugung von Vorschlägen ausgewertet werden, die eine Verwendung und/oder Parametrierung einer Applikation betreffen, zum Beispiel indem zur Verwendung in einer Applikation oder durch eine Applikation in Frage kommende Daten, Datenspeicher usw. ermittelt und automatisch vorgeschlagen werden. Eine Auswahl solcher Daten etc. erfolgt üblicherweise bisher im Rahmen einer Benutzerschnittstelle und nicht mittels einer speziellen Entwicklungsumgebung. Im Rahmen einer solchen Benutzerschnittstelle sind bisher zum Beispiel alle grundsätzlich zur Verfügung stehenden Daten auswählbar. Damit ergibt sich eine ähnliche Komplexität oder Unübersichtlichkeit, wie dies zuvor für den Funktionsumfang einer Programmierschnittstelle erläutert wurde. Wenn dagegen bei der Verwendung einer Applikation, also bei der Auswahl der mittels der Applikation zu be- oder verarbeitenden Daten, bekannt ist, welche Funktionen der Programmierschnittstelle der Programmierer der Applikation verwendet hat und/oder welche Daten mittels solcher verwendeter Funktionen verarbeitbar sind, lässt sich die Gesamtheit der grundsätzlich zur Verfügung stehenden Daten sinnvoll einschränken. Eine solche automatische Einschränkung erlaubt eine schnellere und weniger fehleranfällige Auswahl der mittels der Applikation zu be- oder verarbeitenden Daten. Insoweit ist die Erfindung dann auch ein Verfahren zur Unterstützung eines Anwenders bei einer Anwendung und/oder Parametrierung einer Software-Applikation.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Ausführungsformen des Verfahrens beziehen sich zum Beispiel darauf, wie zumindest eine Funktion der Programmierschnittstelle automatisch als voraussichtlich für den Anwender oder die Applikation relevante Funktion identifizierbar ist.

Bei einer Ausführungsform des Verfahrens wird insofern anhand der Verhaltensdaten des Anwenders ermittelt, welche Funktion oder welche Funktionen der Programmierschnittstelle der Anwender bereits zuvor verwendet hat. Eine solche bisherige Verwendung wird in den Verhaltensdaten protokolliert, insbesondere indem für jede verwendete Funktion nicht nur der Umstand der Verwendung an sich, sondern auch eine die Häufigkeit der Verwendung kodierende Zahl Bestandteil der Verhaltensdaten ist. Eine bereits von dem Anwender verwendete Funktion ist potenziell eine Funktion, die für den Anwender auch für eine nochmalige Verwendung infrage kommt. Der Anwender kennt dann die Wirkungsweise der Funktion, sodass er bereits deshalb geneigt sein könnte, diese wieder zu verwenden. Darüber hinaus ist eine bereits verwendete Funktion offensichtlich eine Funktion, die grundsätzlich zur Lösung einer dem Anwender gestellten Aufgabe in Betracht kommt. Wenn die Verhaltensdaten auch die Häufigkeit der Verwendung einer Funktion kodieren, kann sich aus solchen Daten ein weiteres starkes Indiz für eine potenzielle Relevanz einer Funktion ergeben. Die Verhaltensdaten sind durch das Werkzeug automatisch auswertbar und werden durch das Werkzeug im Zusammenhang mit der Erstellung der jeweiligen Applikation automatisch ausgewertet, sodass das Werkzeug automatisch zur Unterstützung des Anwenders einen Vorschlag für zumindest eine Funktion der Programmierschnittstelle, die für den Anwender und die Applikation relevant sein könnte, erzeugen kann und im Rahmen von dessen Ausführung automatisch erzeugt.

Bei einer zusätzlichen oder alternativen Ausführungsform des Verfahrens wird in grundsätzlich vergleichbarer Art und Weise eine für den Anwender und die Applikation voraussichtlich relevante Funktion automatisch daran erkannt, dass mittels der Funktion IoT-Daten verarbeitbar sind, die der Anwender ausweislich der Verhaltensdaten bereits verwendet hat, insbesondere mehrfach verwendet hat. Auch hier wertet das Werkzeug automatisch die Verhaltensdaten aus. Diese kodieren eine eventuelle Verwendung bestimmter IoT-Daten und optional auch eine Häufigkeit der Verwendung. Durch Auswertung der Verhaltensdaten kann - grundsätzlich wie oben beschrieben - das Werkzeug als potenziell relevante Funktion eine Funktion auswählen, mittels derer solche IoT-Daten verarbeitbar sind. Das Werkzeug verarbeitet dabei zusätzlich eine Datenbasis, die einen Zusammenhang zwischen IoT-Daten und zu deren Bearbeitung bestimmten Funktionen kodiert, zum Beispiel in Form eines oder mehrerer Graphen.

Die automatische Auswahl durch das Werkzeug ist nicht auf die Verarbeitung der Verhaltensdaten des jeweiligen Anwenders selbst beschränkt. Auch aus Verhaltensdaten anderer Anwender - im Folgenden nur zur besseren Unterscheidung als "Programmierer" bezeichnet - können sich Anhalte für eine für den jeweiligen Anwender relevante Funktion ergeben. Wenn zum Beispiel andere Programmierer eine Funktion oder bestimmte Funktionen verwenden oder sogar besonders häufig verwenden, ist dies ein Indiz dafür, dass die betreffende Funktion oder die betreffenden Funktionen auch für den jeweiligen Anwender relevant sein könnten. Das Werkzeug wertet in diesem Falle nicht die Verhaltensdaten des jeweiligen Anwenders, sondern vielmehr die Verhaltensdaten zumindest eines anderen Programmierers, optional mehrerer anderer Programmierer, aus - also im weitesten Sinne des Nutzerverhalten anderer Programmierer. Optional wird insoweit durch das Werkzeug automatisch auch ausgewertet, welche IoT-Daten ein anderer Programmierer nutzt oder andere Programmierer nutzen, um im Rahmen der Funktionalität des Werkzeugs dem jeweiligen Anwender eine Funktion oder mehrere Funktionen der Programmierschnittstelle, die zur Verarbeitung solcher IoT-Daten geeignet sind, als potenziell relevante Funktionen vorzuschlagen.

Genauso, wie mittels des Werkzeugs eine automatische Auswertung des Nutzerverhaltens anderer Programmierer auswertbar ist und durch das Werkzeug ausgewertet wird, ist mittels des Werkzeugs auch automatisch eine "Ähnlichkeit" des jeweiligen Anwenders und eines anderen Programmierers oder mehrerer anderer Programmierer erkennbar. Dafür wertet das Werkzeug die jeweiligen Benutzerdaten aus. Wenn sich anhand der Benutzerdaten zum Beispiel ergibt, dass der jeweilige Anwender und zumindest ein anderer Programmierer im selben Unternehmen tätig sind, kann dies durch das Werkzeug automatisch als Indiz dafür ausgewertet werden, dass für den jeweiligen Anwender vermutlich dieselben Funktionen, Daten und/oder Datenspeicher von Interesse sind, die auch der andere Programmierer ausweislich von dessen Verhaltensdaten bereits benutzt hat. Ähnliches gilt zum Beispiel, wenn sich unter den gespeicherten Benutzerdaten für andere Programmierer Benutzerdaten zumindest eines Programmierers finden (und automatisch durch das Werkzeug ermittelt werden), anhand derer sich ergibt, dass der jeweilige Anwender und der zumindest eine andere Programmierer in ihrem jeweiligen Unternehmen gleiche oder ähnliche Aufgaben haben. Auch dies ist ein automatisch auswertbares Indiz dafür, dass für den jeweiligen Anwender vermutlich dieselben Funktionen, Daten und/oder Datenspeicher von Interesse sind, die auch der andere Programmierer ausweislich von dessen Verhaltensdaten bereits benutzt hat.

Wenn mittels des Werkzeugs solche Auswertungen nacheinander in Bezug auf einzelne Kriterien (Unternehmen, Aufgabe etc.) ausgeführt werden und sich dabei jeweils Überschneidungen und entsprechend mutmaßlich relevante Funktionen etc. für den jeweiligen Anwender ergeben, kann eine Priorisierung der Vorschläge für den jeweiligen Anwender anhand einer durch das Werkzeug automatisch ausgeführten quantitativen Bewertung der Überschneidung vorgenommen werden. Wenn sich nämlich zum Beispiel ergibt, dass ein anderer Programmierer in demselben Unternehmen tätig ist und dort eine gleiche oder ähnliche Aufgabe hat, rechtfertigt dies die Annahme, dass die von diesem Programmierer ausweislich von dessen Verhaltensdaten bisher verwendeten Funktionen etc. für den jeweiligen Anwender von größerer Relevanz sein könnten als von einem nochmals anderen Programmierer benutzte Funktionen etc., der "nur" im selben Unternehmen tätig ist oder in einem anderen Unternehmen "nur" eine gleiche oder ähnliche Aufgabe hat.

Alle hier und im Folgenden als Funktion des Werkzeugs beschriebenen Funktionen gelten genauso auch für die Programmierschnittstelle, nämlich zum Beispiel eine Programmierschnittstelle mit einer Benutzerabgleichsfunktion, welche die als Funktion des Werkzeugs beschriebenen Funktionen implementiert. Bei einer solchen Programmierschnittstelle reduziert sich der Umfang des Werkzeugs, denn das Werkzeug ruft die Benutzerabgleichsfunktion auf, welche dann die ansonsten als Funktionen des Werkzeugs implementierten Funktionen umfasst.

Das hier vorgeschlagene und im Folgenden mit weiteren Details beschriebene Verfahren ist zur automatischen Ausführung in Form eines Computerprogramms realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln. Die Erfindung ist schließlich auch ein Programmiergerät, das zur Erstellung einer Applikation für einen Zugriff auf IoT-Daten mittels einzelner oder mehrerer von einer Programmierschnittstelle umfasster Funktionen bestimmt ist und in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Anwender des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: Applikationen, die zum Zugriff auf IoT-Daten Funktionen einer Programmierschnittstelle (API) nutzen,
- FIG 2: ein Werkzeug, welches nach dem hier vorgeschlagenen Ansatz einen Anwender bei einer Erstellung einer Applikation gemäß FIG 1 unterstützt,
- FIG 3: eine vereinfachte Darstellung der Funktionsweise des Werkzeugs, und
- FIG 4: eine Liste als Beispiel für eine mittels des Werkzeugs zur Unterstützung des Anwenders generierte Ausgabe.

Das sogenannte Internet of Things (IoT) kann als ein Netzwerk von Gegenständen und/oder Vorrichtungen angesehen werden, welche in Form einer den Gegenständen oder Vorrichtungen zugeordneten Sensorik gewissermaßen eine integrierte Sensorik aufweisen, so dass eine Aufnahme von Daten und ein Datenaustausch möglich sind. Zu den von einem solchen Netzwerk umfassten Gegenständen oder Vorrichtungen gehören zum Beispiel Maschinen, Anlagen, Anlagenteile und allgemein automatisierte technische Anlagen mit der davon umfassten Steuerungshardware sowie den jeweils gesteuerten und/oder überwachten Vorrichtungen sowie die diesen zugeordneten Aktoren und Sensoren.

Eine Vielzahl von Unternehmen entwickelt Lösungen und Anwendungen zur Verarbeitung und Verwendung von in einem solchen Rahmen entstehenden Daten (IoT-Daten). Auch solche Anwendungen sind optional untereinander wieder vernetzt, zum Beispiel in der Form, dass eine Anwendung zum Beispiel Daten benutzt, die auch von einer anderen Anwendung benutzt werden und/oder dass eine Anwendung zur Verarbeitung von Daten eine Funktion nutzt, die auch von einer anderen Anwendung benutzt wird. Insgesamt entsteht damit eine in der Fachterminologie mitunter auch als "Ecosystem" bezeichnete Plattform (IoT-Plattform) zum Zugriff auf und zur Verwendung von IoT-Daten.

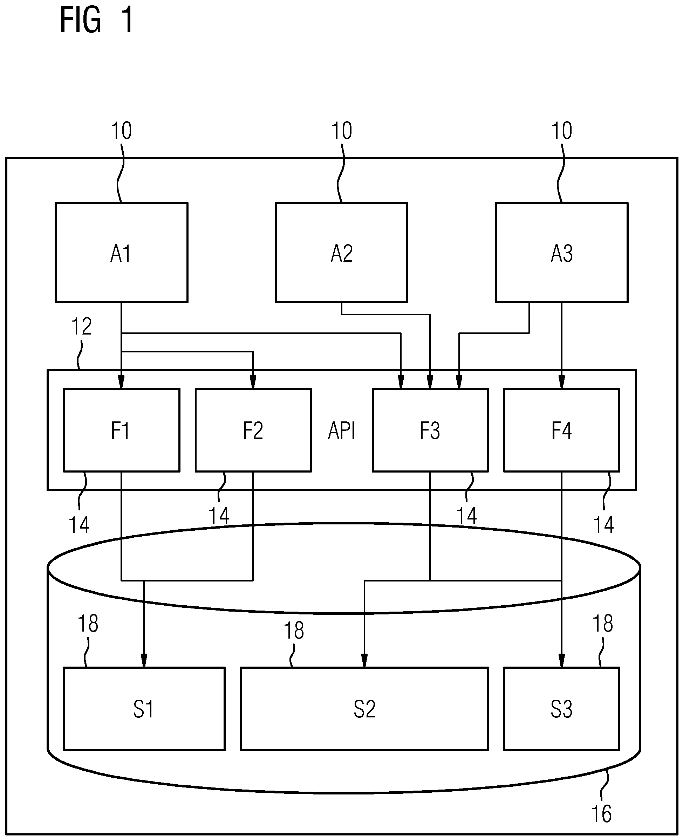

Die Darstellung in FIG 1 zeigt schematisch vereinfacht eine Mehrzahl Applikationen 10 (Anwendungen), die zur Unterscheidung symbolisch mit "A1", "A2" und "A3" bezeichnet sind. Die Anzahl der Applikationen 10 ist grundsätzlich beliebig. Die Applikationen 10 benutzen zum Zugriff auf IoT-Daten zumindest einzelne Funktionen 14, die von einer Programmierschnittstelle 12 (API) zur Verfügung gestellt werden. Die Anzahl der Funktionen 14 innerhalb der API 12 ist grundsätzlich ebenfalls beliebig. Symbolisch sind die in FIG 1 gezeigten Funktionen 14 zur Unterscheidung mit "F1", "F2", "F3" und "F4" bezeichnet. Die Applikationen 10 benutzen und/oder verarbeiten unter Verwendung einer Funktion 14 oder mehrerer Funktionen 14 Daten (IoT-Daten), die in einem Datenpool 16, insbesondere einem in der sogenannten Cloud gebildeten Datenpool 16, gegebenenfalls auch einem verteilten Datenpool 16, vorgehalten werden. Bei den Daten handelt es sich zum Beispiel um mittels einer jeweiligen Sensorik aufgenommene Sensordaten, zum Beispiel in Form von Zeitreihen, oder dergleichen. Gleichartige oder in sonstiger Weise zusammengehörige Daten können in einzelnen (gegebenenfalls verteilten) Speichern 18, welche in ihrer Gesamtheit den Datenpool 16 bilden, vorgehalten werden. Die in FIG 1 gezeigten Speicher 18 sind zur Unterscheidung symbolisch mit "S1", "S2" und "S3" bezeichnet.

Zurückkommend auf die vorangestellten allgemeinen Ausführungen ergibt sich anhand der in FIG 1 dargestellten Situation, dass die Applikationen 10 mit der symbolischen Bezeichnung "A1", "A2" und "A3" allesamt die Funktion 14 mit der symbolischen Bezeichnung "F3" verwenden und über diese zum Beispiel Zugriff auf Daten in den Speichern 18 mit der symbolischen Bezeichnung "S2" und "S3" haben.

Typische Anwendungsfälle im Zusammenhang mit einem solchen oder ähnlichen Datenzugriff sind eine Visualisierung der Daten, eine Umwandlung / Transformation der Daten, Berechnungen und Analysen auf Basis der Daten usw. Funktionen 14, die in diesem Zusammenhang verwendet werden, sind üblicherweise Funktionen 14 einer sogenannten ReST API (Representational State Transfer API) und eine solche API ist ein konkretes Beispiel für eine im Rahmen des hier vorgeschlagenen Verfahrens verwendbare Programmierschnittstelle 12.

Eine solche oder eine vergleichbare Programmierschnittstelle 12 bietet eine umfangreiche Anzahl von Funktionen 14 zum Zugriff auf einzelne Speicher 18 oder eine Mehrzahl von Speichern 18 sowie auf die darin vorgehaltenen Daten. Einzelne Funktionen 14 werden häufiger benutzt als andere Funktionen 14. Speziell in Abhängigkeit von der Mächtigkeit der jeweiligen Programmierschnittstelle 12, also zum Beispiel in Abhängigkeit von der Anzahl der im Rahmen der Programmierschnittstelle 12 zur Verfügung stehenden Funktionen 14, kann sich eine Komplexität der Programmierschnittstelle 12 ergeben, die eine Übersicht über den insgesamt zur Verfügung stehenden Leistungsumfang erschwert. Ein Anwender der Programmierschnittstelle 12 muss sich folglich unter Umständen aufwendig mit dem jeweils angebotenen Leistungsumfang auseinandersetzen, um schließlich diejenigen Funktionen 14 sowie die Daten und deren Speicherorte identifizieren zu können, die für eine jeweilige Aufgabe benötigt werden. Dafür braucht der Anwender zumindest grundlegende Programmierkenntnisse, die es ihm ermöglichen, die der Programmierschnittstelle 12 zugrunde liegende Systematik zu erkennen und zu verstehen. Des Weiteren muss der Anwender zumindest einmal den Funktionsumfang aller zur Verfügung stehenden Funktionen 14 durchgehen, um auf der einen Seite den konkreten Leistungsumfang jeder einzelnen Funktion 14 beurteilen und ausgehend davon auf der anderen Seite auch entscheiden zu können, welche von eventuell mehreren infrage kommenden Funktionen 14 für eine jeweilige Aufgabe am besten geeignet ist.

Der hier vorgeschlagene Ansatz hat zum Ziel, diesen Aufwand zu reduzieren oder zumindest zu kanalisieren.

Bisher werden Applikationen 10 zum Zugriff auf IoT-Daten üblicherweise von einem Experten (IT-Experten) erstellt, der sich im Rahmen seiner Erfahrung den oben skizzierten Überblick vergleichsweise leicht verschaffen kann. Damit ergibt sich aber auch eine recht begrenzte Anzahl von Personen, die solche Applikationen 10 erstellen können.

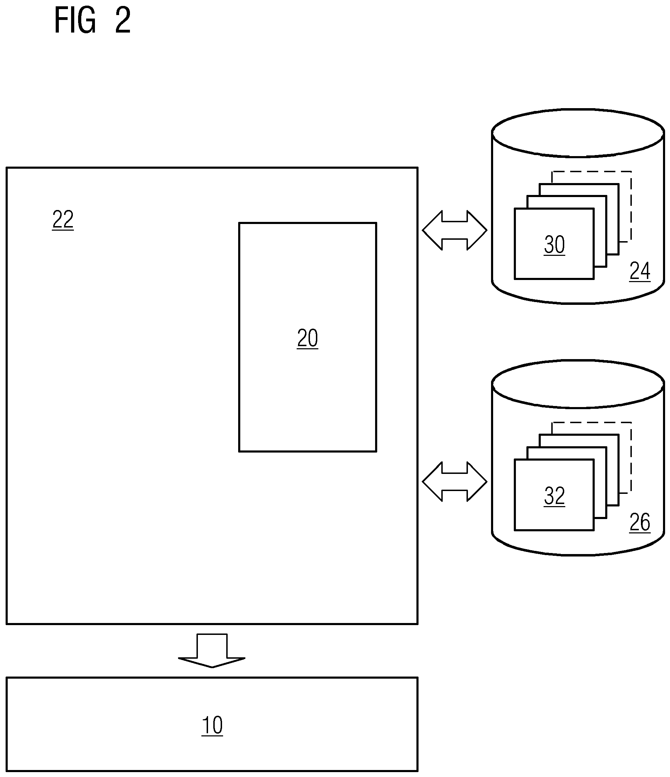

Nach dem hier vorgeschlagenen Ansatz ist vorgesehen, dass der Anwender, vor allem auch ein Anwender, der nicht zum Kreis der IT-Experten zählt, beim Erstellen einer Applikation 10 mittels eines Werkzeugs (Tool) 20 unterstützt wird. Ein solches Werkzeug 20 ist als Computerprogramm realisiert und schematisch vereinfacht in FIG 2 gezeigt. Das Computerprogramm wird als Bestandteil einer zum Erstellen einer Applikation 10 bestimmten Entwicklungsumgebung 22 oder in sonstiger Art und Weise gewissermaßen im Hintergrund ausgeführt. Das Werkzeug 20 "beobachtet" im weitesten Sinne den Anwender beim Erstellen der Applikation 10 und/oder beim Verwenden der Entwicklungsumgebung 22. Die Ergebnisse dieser Beobachtung bilden die Basis für die mittels des Werkzeugs 20 automatisch angebotene Unterstützung für den Anwender.

Dazu zeigt die Darstellung in FIG 2 schematisch vereinfacht auch die von dem Werkzeug 20 für eine solche automatische Unterstützung verwendeten Daten. Zur besseren Unterscheidbarkeit der Daten sind dafür eine erste Datenbasis 24 und eine zweite Datenbasis 26 gezeigt. Die erste Datenbasis 24 umfasst Benutzerdaten 30. Die zweite Datenbasis 26 umfasst Verhaltensdaten 32. Das Werkzeug 20 legt diese Daten 30, 32 automatisch an und in der jeweiligen Datenbasis 24, 26 ab und verwendet diese Daten 30, 32 bei der automatischen Unterstützung des Anwenders. Die erste und die zweite Datenbasis 24, 26 können physikalisch demselben Speicher oder verschiedenen Speichern zugeordnet sein.

Als Benutzerdaten 30 wird zum Beispiel für jeden Anwender eine den Anwender eindeutig identifizierende Kennung (UserID), ein Unternehmen, für das der Anwender tätig ist, eine Position des Anwenders in dem jeweiligen Unternehmen und/oder sicherheitsspezifische Informationen (Security Role) zum Beispiel bezüglich der Berechtigungen des Anwenders im Rahmen der Benutzung der jeweiligen IoT-Plattform, erfasst. Darüber hinaus kann zusätzlich oder alternativ im Rahmen der Benutzerdaten 30 noch der Zeitpunkt (Datum oder Datum und Uhrzeit als Zeitstempel) gespeichert werden, zu dem für den betreffenden Anwender erstmalig die Benutzerdaten 30 angelegt wurden.

Ein Datensatz mit Benutzerdaten 30 umfasst demnach zum Beispiel die folgenden Informationen:
UserID
Unternehmen
Position im Unternehmen
Security Role
Zeitstempel

Als Verhaltensdaten 32 werden Daten erfasst, die während der Benutzung der Entwicklungsumgebung 22 durch den Anwender und/oder während der Benutzung der Programmierschnittstelle 12 entstehen und für das jeweilige Benutzungsverhalten charakteristisch sind.

Ein Datensatz mit Verhaltensdaten 32 umfasst demnach zum Beispiel die folgenden Informationen:
UserID
Zeitstempel
benutzte Funktion(en) 14
Parameter einer benutzten Funktion 14 oder benutzter Funktionen 14
benutzte Daten / Datenspeicher 18

Über die den Anwender eindeutig bezeichnende Kennung (UserID) können die Benutzerdaten 30 eines Anwenders und die Verhaltensdaten 32 des Anwenders miteinander kombiniert werden.

Im Zuge einer Erstellung einer Applikation 10 oder mehrerer Applikationen 10 entstehen zunehmend detailliertere Verhaltensdaten 32 bezüglich des jeweiligen Anwenders, zum Beispiel indem in den Verhaltensdaten 32 aufgezeichnet wird, dass der Anwender häufig ein und dieselbe Funktion 14 oder bestimmte Funktionen 14 aus einer Gruppe von Funktionen 14 benutzt.

Bereits diese Information kann aufgrund einer automatischen Auswertung durch das Werkzeug 20 zur Unterstützung des Anwenders verwendet werden, indem dem Anwender im Zuge einer Möglichkeit zur Auswahl einer Funktion 14 die oder jede häufig benutzte Funktion 14 vorrangig angeboten wird. Ein solches vorrangiges Anbieten kann zum Beispiel dadurch erfolgen, dass eine Funktion 14 oder einzelne Funktionen 14 am Beginn einer Liste mit zur Auswahl zur Verfügung stehenden Funktionen 14 angezeigt werden. Eine alternative Möglichkeit besteht zum Beispiel darin, dass bei einer Präsentation der zur Auswahl zur Verfügung stehenden Funktionen 14 in Form eines Baums häufig benutzte Funktionen 14 mittels eines Knotens des Baums zusammengefasst werden und ein solcher Knoten optional nahe der Wurzel des Baums, insbesondere unmittelbar im Anschluss an die Wurzel des Baums, dargestellt wird. Bei einer derartigen oder vergleichbaren Präsentation der Funktionen 14, die zur Auswahl zur Verfügung stehen, hat der Anwender bisher häufig benutzte Funktionen 14 schnell im Blick und kann diese genauso schnell erneut auswählen und muss nicht auswendig eine jeweils gewünschte Funktion 14 in einer umfangreichen Liste oder einer komplizierten Baumstruktur heraussuchen.

Genauso wie dies vorstehend für eine oder mehrere häufig benutzte Funktionen 14 skizziert wurde, kann erfasst werden, welche Daten und/oder welche Datenspeicher 18 der Anwender bisher verwendet hat, sodass ihm diese oder eine Funktion 14 oder mehrere Funktionen 14, mittels derer solche Daten verarbeitbar sind, ebenfalls in einer deren erneute Auswahl erleichternden Art und Weise präsentiert werden, zum Beispiel am Beginn einer Liste oder an einer schnell erreichbaren Stelle einer Baumstruktur.

In ähnlicher Art und Weise können allerdings auch Querbeziehungen hergestellt werden. Ein Anwender, der erstmals mit der Programmierschnittstelle 12 und der Entwicklungsumgebung 22 arbeitet, kann noch nicht aufgrund eigener Verhaltensdaten 32 unterstützt werden. Wenn der Anwender allerdings bestimmte Daten und/oder Datenspeicher 18 auswählt, kann anhand der Verhaltensdaten 32 anderer Anwender automatisch durch das Werkzeug 20 erkannt werden, welche Funktion 14 oder welche Funktionen 14 solche anderen Anwender zum Zugriff auf diese Daten bzw. Datenspeicher 18 verwendet haben. Somit kann auch ein Anwender ohne eigene Verhaltensdaten 32 oder mit wenigen eigenen Verhaltensdaten 32 mittels des Werkzeugs 20 eine automatische Unterstützung erhalten, indem von anderen Anwendern verwendete Funktionen 14 in der oben beschriebenen und eine Auswahl erleichternden Art präsentiert werden. Dasselbe gilt entsprechend für eine Auswahl einer Funktion 14 durch den Anwender ohne eigene Verhaltensdaten 32 oder mit wenigen eigenen Verhaltensdaten 32. Auch hier kann diesem Anwender aufgrund der Verhaltensdaten 32 anderer Anwender durch das Werkzeug 20 automatisch ein sinnvoller Vorschlag bezüglich mittels der jeweiligen Funktion 14 verarbeitbarer Daten und/oder verwendbarer Datenspeicher 18 gemacht werden.

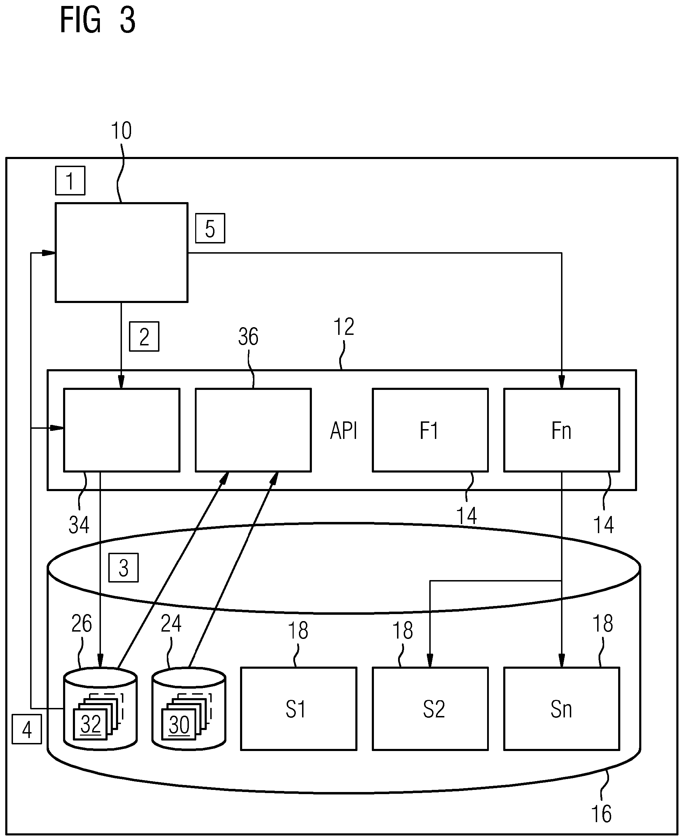

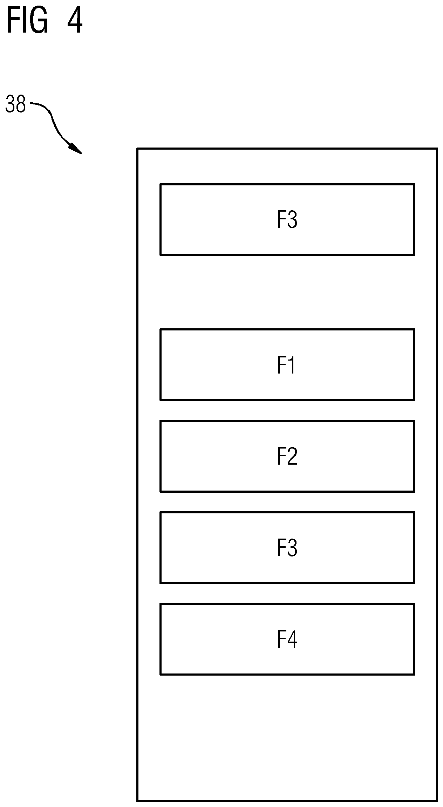

Die Darstellung in FIG 3 zeigt in schematisch vereinfachter Art und Weise einen Ablauf bei der Verwendung des Werkzeugs 20 (FIG 2). In einem ersten Schritt ("1") wird eine neue Applikation 10 erzeugt und erstmalig gestartet (bei noch nicht existierenden Benutzerdaten 30 für diesen Anwender werden diese jetzt angelegt und zum Beispiel im Datenpool 16 gespeichert). In einem zweiten Schritt ("2") werden mittels des Werkzeugs 20 auf Basis der Benutzerdaten 30 und der Verhaltensdaten 32 des jeweiligen Anwenders (des Programmierers der neuen Applikation 10) automatisch Vorschläge für den Anwender generiert. Bei noch nicht existierenden Verhaltensdaten 32 oder gegebenenfalls unzureichenden Verhaltensdaten 32 unterbleibt ein solcher Vorschlag und dem Anwender wird zum Beispiel anstelle einer wie oben beschrieben spezifisch für ihn generierten Auswahlmöglichkeit eine Auswahlmöglichkeit angeboten (zum Beispiel an einem Bildschirm dargestellt), welche den gesamten Funktionsumfang der Programmierschnittstelle 12 abdeckt. Mittels einer in Software implementierten und zu der Programmierschnittstelle 12 gehörigen Datenzugriffsfunktion 34 wird eine jeweilige Auswahl des Anwenders, also zum Beispiel eine Auswahl einer Funktion 14 oder mehrerer Funktionen 14 und/oder eine Auswahl eines Datenspeichers 18 oder mehrerer Datenspeicher 18 oder darin vorgehaltener Daten überwacht und erfasst. Die Erfassung erfolgt in den Verhaltensdaten 32 des die jeweilige Applikation 10 erstellenden Anwenders. In einem dritten Schritt ("3") werden aufgrund der Benutzerdaten 30 und der Verhaltensdaten 32 wahrscheinliche Funktionen 14, Datenspeicher 18 und/oder Daten identifiziert. Eine wahrscheinliche Funktion 14 ist dabei eine Funktion 14, die für den Anwender relevant sein könnte. Die Relevanz ergibt sich zum Beispiel anhand der Verhaltensdaten 32, wenn der Anwender diese Funktion 14 bereits früher verwendet hat, oder anhand der Verhaltensdaten 32, wenn der Anwender Daten, die mit dieser Funktion 14 abrufbar und/oder verarbeitbar sind, ausgewählt hat, usw. Zusätzlich oder alternativ können auch die Benutzerdaten 30 und/oder Verhaltensdaten 32 anderer Programmierer ausgewertet werden. In einem vierten Schritt ("4") wird ein Vorschlag erzeugt und angezeigt. Eine mögliche automatisch durch das Werkzeug 20 generierte Auswahlmöglichkeit ist in der Darstellung in FIG 4 schematisch vereinfacht gezeigt. Hier werden die grundsätzlich zur Verfügung stehenden Funktionen 14 in einer Liste 38 angezeigt und damit zur Auswahl angeboten. Eine für den Anwender besonders relevante Funktion 14 wird in der Liste 38 an prominenter Stelle, nämlich zum Beispiel an erster Stelle, angezeigt.

Ähnliches gilt entsprechend für wahrscheinliche Datenspeicher 18 und wahrscheinliche Daten. Auch hier ergibt sich die Wahrscheinlichkeit anhand einer aufgrund der Auswertung der Benutzerdaten 30 und der Verhaltensdaten 32 ermittelten mutmaßlichen Relevanz für den Anwender. In einem anschließenden fünften Schritt ("5") wählt der Anwender (oder optional auch das Werkzeug 20 für den Anwender) zum Beispiel eine Funktion 14, einen Datenspeicher 18 und/oder Daten zur Verwendung in der jeweiligen Applikation 10 aus. Daraus ergeben sich konkretisierte Verhaltensdaten 32, die bei einem zyklischen Ablauf der Schritte "2", "3", "4" und "5" berücksichtigt werden.

Ein separater Aspekt der hier vorgeschlagenen Neuerung besteht darin, dass einerseits das Werkzeug 20 die Benutzerdaten 30 und die Verhaltensdaten 32 nutzen kann, um - wie beschrieben - automatisch Vorschläge für voraussichtlich relevante Funktion 14, Daten, Datenspeicher 18 usw. zu machen, und dass andererseits aber die Programmierschnittstelle 12 der zentrale Dreh- und Angelpunkt für die Erfassung solcher Daten ist und damit im weitesten Sinne die Programmierschnittstelle 12 selbst - bei einer entsprechenden, grundsätzlich optionalen Ausgestaltung - über Daten verfügt, welche deren bisherige Benutzung durch verschiedene Benutzer charakterisieren.

Die damit bei der Programmierschnittstelle 12 vorliegenden Informationen können im Wege eines Aufrufs einer speziellen Funktion abgefragt werden. Diese spezielle Funktion wird im Folgenden zur Unterscheidung als Benutzerabgleichsfunktion 36 bezeichnet. Zur Unterscheidung werden daher die verschiedenen Benutzer der Programmierschnittstelle 12 wie folgt bezeichnet: Ein Anwender ist diejenige Person oder Personengruppe, für die durch Verwendung der Benutzerabgleichsfunktion 36 Informationen in Bezug auf eine bisherige Benutzung der Programmierschnittstelle 12 ermittelt werden sollen. Ein Benutzer ist jede Person oder Personengruppe, für die im Rahmen der Benutzung der Programmierschnittstelle 12 bereits Benutzerdaten 30 und Verhaltensdaten 32 erzeugt wurden. Ein Anwender ist ebenfalls ein Benutzer in diesem Sinne, aber möglicherweise ein erstmaliger Benutzer.

Durch einen Aufruf der Benutzerabgleichsfunktion 36 durch einen solchen Anwender oder für einen solchen Anwender soll im Wege eines Zugriffs auf die bei der Programmierschnittstelle 12 vorliegenden Informationen (Benutzerdaten 30, Verhaltensdaten 32) ermittelt werden, ob ein anderer Benutzer die Programmierschnittstelle 12 bereits in einer Art und Weise benutzt hat oder momentan benutzt, wie dies auch für den jeweiligen Anwender erwartet werden kann.

Ein Aufruf durch einen Anwender ist zum Beispiel ein Aufruf, wie er sich beim Erstellen einer Applikation 10 ergibt. Der Anwender verwendet zur Erstellung der jeweiligen Applikation 10 eine Entwicklungsumgebung 22. Diese umfasst ein Werkzeug 20 der oben beschriebenen Art oder ruft ein solches Werkzeug 20 auf. Das Werkzeug 20 ruft die Benutzerabgleichsfunktion 36 auf. Der Aufruf erfolgt also mittelbar durch den die Entwicklungsumgebung 22 und damit das Werkzeug 20 verwendenden Anwender (Aufruf durch den Anwender).

Ein Aufruf für einen Anwender ist zum Beispiel ein Aufruf, wie er sich beim Verwenden, zum Beispiel beim Parametrieren, einer bereits vorliegenden Applikation 10 ergibt. Der Anwender parametriert die Applikation 10 mittels einer Benutzerschnittstelle. Ein Computerprogramm zum Anzeigen und Auswerten der Benutzerschnittstelle ruft die Benutzerabgleichsfunktion 36 auf. Der Aufruf erfolgt durch das Computerprogramm und für den das Computerprogramm verwendenden Anwender (Aufruf für den Anwender). Der Anwender meldet sich bei einem solchen Computerprogramm an, um im Wege der Anmeldung Zugriff auf das Computerprogramm und eine Berechtigung für dessen Verwendung zu erhalten. Bei einer solchen Anmeldung werden zum Beispiel in grundsätzlich an sich bekannter Art und Weise ein Benutzername und ein Kennwort abgefragt und in Bezug auf gespeicherte Benutzerdaten überprüft. Mittels einer solchen Anmeldung hat das Computerprogramm demnach Zugriff auf zum Aufruf der Benutzerabgleichsfunktion 36 verwendbare Benutzerdaten. Das Computerprogramm kann darüber hinaus - genauso wie dies zuvor für die Entwicklungsumgebung 22 beschrieben wurde - weitere Daten bezüglich des Anwenders speichern. Damit verfügt das Computerprogramm optional auch über als Verhaltensdaten beim Aufruf der Benutzerabgleichsfunktion 36 verwendbare Daten.

Die Benutzerabgleichsfunktion 36 wird zum Beispiel mit den Benutzer- und/oder Verhaltensdaten 30, 32 des jeweiligen Anwenders als Parameter aufgerufen, woraufhin im Rahmen der Benutzerabgleichsfunktion 36 automatisch in der Datenbasis 24 mit Benutzerdaten 30 und/oder der Datenbasis 26 mit Verhaltensdaten 32 Übereinstimmungen ermittelt werden. Das Ermitteln solcher Übereinstimmungen erfolgt automatisch im Rahmen der Funktionalität der Benutzerabgleichsfunktion 36 (oder einer von dieser speziellen Funktion 36 aufgerufenen weiteren Funktion). Eine Übereinstimmung in Bezug auf die Benutzerdaten 30 ist zum Beispiel gegeben, wenn in der Datenbasis 24 mit Benutzerdaten 30 ein Datensatz gefunden wird, der für einen Benutzer angelegt wurde, der in demselben Unternehmen tätig ist wie der Anwender. Dann kann davon ausgegangen werden, dass der Anwender ähnliche Daten, Datenspeicher 18 und/oder Funktionen 14 benötigt. Dem Anwender können also die Daten, Datenspeicher 18 und/oder Funktionen 14, die der Benutzer, für den die ermittelten Benutzerdaten 30 angelegt wurden, verwendet hat, in der oben beschriebenen Art vorgeschlagen werden.

Die Besonderheit gegenüber der zuvor beschriebenen automatischen Unterstützung eines Anwenders bei der Erstellung einer Applikation 10 besteht darin, dass die Unterstützung bereits auf der Ebene der Programmierschnittstelle 12 besteht und auch dann erfolgt, wenn der Anwender gar keine Applikation 10 selbst erstellen will oder muss, sondern eine bereits bestehende Applikation 10 verwenden will. Dann wird der Anwender mittels der Ergebnisse der Benutzerabgleichsfunktion 36 zum Beispiel bei der Auswahl derjenigen Daten und/oder Datenspeicher 18 unterstützt, die mittels der jeweiligen Applikation 10 be- und/oder verarbeitet werden sollen. Die Benutzerabgleichsfunktion 36 umfasst dann (entweder selbst oder in Form einer oder mehrerer durch die Benutzerabgleichsfunktion 36 aufrufbarer weiterer Funktionen) die zuvor im Zusammenhang mit der Erläuterung der Funktionalität des Werkzeugs 20 beschriebene Funktionalität.

Insofern ist die Erfindung auch eine Programmierschnittstelle 12, die zumindest eine solche Benutzerabgleichsfunktion 36 umfasst, welche bei deren Aufruf Informationen über eine aktuelle und/oder historische Benutzung der Programmierschnittstelle 12 und der davon umfassten Funktionen 14 durch andere Benutzer liefert.

Optional fungiert die Benutzerabgleichsfunktion 36 auch als Schnittstelle, insbesondere als einzige Schnittstelle, zwischen dem zuvor erläuterten Werkzeug 20 und den gespeicherten Benutzer- und Verhaltensdaten 30, 32. Die zuvor im Zusammenhang mit der Erläuterung der Funktionalität des Werkzeugs 20 beschriebene Funktionalität kann dann ganz oder teilweise als Funktionalität der Benutzerabgleichsfunktion 36 oder einer oder mehrerer durch die Benutzerabgleichsfunktion 36 aufrufbarer weiterer Funktionen realisiert sein.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben wird ein Verfahren zur Unterstützung eines Anwenders bei einer Erstellung einer Applikation 10, die für einen Zugriff auf IoT-Daten bestimmt ist und bei der ein solcher Zugriff mittels einzelner oder mehrerer von einer Programmierschnittstelle 12 umfasster Funktionen 14 erfolgt. Im Rahmen des Verfahrens ist vorgesehen, dass bei einer Erstellung der Applikation 10 oder im Zusammenhang mit der Erstellung der Applikation 10 für den Anwender charakteristische Benutzerdaten 30 und Verhaltensdaten 32 aufgenommen und/oder erzeugt werden und dass ein in Software implementiertes Werkzeug 20 bei der Erstellung der Applikation 10 automatisch die Benutzerdaten 30 und die Verhaltensdaten 32 auswertet und auf deren Basis als Unterstützung des Anwenders automatisch einen Vorschlag für zumindest eine Funktion 14 der Programmierschnittstelle 12, die für den Anwender und die Applikation 10 relevant sein könnte, erzeugt und dem Anwender anzeigt. Angegeben wird des Weiteren eine im Rahmen eines solchen Verfahrens, aber vor allem auch eine unabhängig von der Ausführung eines solchen Verfahrens verwendbare Programmierschnittstelle 12, welche - kurz gefasst - automatisch und selbsttätig für unterschiedliche Anwender/Benutzer die Art der Verwendung der Programmierschnittstelle 12, insbesondere die verwendeten Funktionen 14, erfasst und für eine Auswertung zur Verfügung stellt.

## Patentansprüche

1. Verfahren zur Unterstützung eines Anwenders bei einer Erstellung einer Applikation (10) für einen Zugriff auf IoT-Daten mittels einzelner oder mehrerer von einer Programmierschnittstelle (12) umfasster Funktionen (14),
wobei bei einer Erstellung der Applikation (10) oder im Zusammenhang mit der Erstellung der Applikation (10) für den Anwender charakteristische Benutzerdaten (30) und Verhaltensdaten (32) aufgenommen und/oder erzeugt werden und
wobei ein in Software implementiertes Werkzeug (20) bei der Erstellung der Applikation (10) automatisch die Benutzerdaten (30) und/oder die Verhaltensdaten (32) auswertet und auf deren Basis als Unterstützung des Anwenders automatisch einen Vorschlag für zumindest eine Funktion (14) der Programmierschnittstelle (12), die für den Anwender und die Applikation (10) relevant sein könnte, erzeugt und dem Anwender anzeigt,
wobei als Verhaltensdaten (32) Daten erfasst werden, die bei der Erstellung einer Applikation (10) durch den Anwender entstehen und für das jeweilige Benutzungsverhalten charakteristisch sind,
wobei die erfassten Verhaltensdaten (32) mindestens ein Verhalten eines Programmierers kodieren, das darin besteht, eine bestimmte Funktion (14) der Programmierschnittstelle (12) auszuwählen und in der Applikation (10) zum Zugriff auf IoT-Daten vorzusehen,
**dadurch gekennzeichnet, dass**
eine für den Anwender und die Applikation (10) voraussichtlich relevante Funktion (14) eine Funktion (14) ist, die ein anderer Anwender ausweislich der Verhaltensdaten (32) dieses anderen Anwenders bereits verwendet hat,
wobei eine solche Funktion (14) automatisch durch das Werkzeug (20) anhand der Verhaltensdaten (32) des anderen Anwenders ausgewählt wird.

2. Verfahren nach Anspruch 1,
wobei eine für den Anwender und die Applikation (10) voraussichtlich relevante Funktion (14) eine Funktion (14) ist, die der Anwender ausweislich der Verhaltensdaten (32) bereits verwendet hat,
wobei eine solche Funktion (14) automatisch durch das Werkzeug (20) anhand der Verhaltensdaten (32) ausgewählt wird.

3. Verfahren nach Anspruch 1 oder 2,
wobei eine für den Anwender und die Applikation (10) voraussichtlich relevante Funktion (14) eine Funktion (14) ist, mittels derer Daten verarbeitbar sind, die der Anwender ausweislich der Verhaltensdaten (32) bereits verwendet hat,
wobei eine solche Funktion (14) automatisch durch das Werkzeug (20) anhand der Verhaltensdaten (32) ausgewählt wird.

4. Verfahren nach einem der Ansprüche 1 bis 3,
wobei eine für den Anwender und die Applikation (10) voraussichtlich relevante Funktion (14) eine Funktion (14) ist, mittels derer Daten verarbeitbar sind, die ein anderer Anwender ausweislich der Verhaltensdaten (32) dieses anderen Anwenders bereits verwendet hat,
wobei eine solche Funktion (14) automatisch durch das Werkzeug (20) anhand der Verhaltensdaten (32) des anderen Anwenders ausgewählt wird.

5. Verfahren nach einem der Ansprüche 1 bis 4,
wobei die Programmierschnittstelle (12) eine Programmierschnittstelle (12) mit Funktionen (14) zum Zugriff auf IoT-Daten ist,
wobei beim Erstellen oder Verwenden einer Applikation (10), welche eine Funktion (14) der Programmierschnittstelle (12) verwendet, diesbezügliche charakteristische Daten, nämlich zumindest Verhaltensdaten (32) gespeichert werden, welche die Verwendung der jeweiligen Funktion (14) kodieren und
wobei die Programmierschnittstelle (12) eine Benutzerabgleichsfunktion (36) umfasst, welche zumindest die Verhaltensdaten (32) für einen Anwender der Programmierschnittstelle (12) verfügbar macht.

6. Verfahren nach Anspruch 5,
wobei die Programmierschnittstelle (12) derart ausgebildet ist, dass die Benutzerabgleichsfunktion (36) durch oder für einen Anwender aufrufbar ist und wobei die Benutzerabgleichsfunktion (36) durch den Anwender mit zumindest einem Parameter aufrufbar ist, welcher den Anwender und/oder dessen Benutzerverhalten charakterisiert.

7. Verfahren nach Anspruch 5 oder 6,
wobei das Werkzeug (20) zum Zugriff auf die Benutzerdaten (30) und/oder die Verhaltensdaten (32) die Benutzerabgleichsfunktion (36) der Programmierschnittstelle (12) aufruft.

8. Programmierschnittstelle (12) mit Funktionen (14) zum Zugriff auf IoT-Daten, ausgebildet zur Ausführung eines Verfahrens nach einem der Ansprüche 1 bis 7.

9. Computerprogramm (20) mit Programmcodemitteln, um alle Schritte von jedem beliebigen der Ansprüche 1 bis 7 durchzuführen, wenn das Computerprogramm auf einem zur Erstellung einer Applikation (10) für einen Zugriff auf IoT-Daten mittels einzelner oder mehrerer von einer Programmierschnittstelle (12) umfasster Funktionen (14) bestimmten Programmiergerät ausgeführt wird.

## Claims

1. Method for assisting a utilizer in creating an application (10) for accessing IoT data by means of single or multiple functions (14) that a programming interface (12) comprises,
wherein when the application (10) is created or in connection with the application (10) being created, user data (30) and behavioural data (32) that are characteristic of the utilizer are recorded and/or produced and
wherein when the application (10) is created, a softwareimplemented tool (20) automatically evaluates the user data (30) and/or the behavioural data (32) and takes them as a basis for automatically producing, as assistance for the utilizer, a proposal for at least one function (14) of the programming interface (12) that could be relevant to the utilizer and the application (10) and displays said proposal to the utilizer,
wherein the behavioural data (32) captured are data that arise, and are characteristic of the respective use behaviour, when an application (10) is created by the utilizer,
wherein the captured behavioural data (32) encode at least one behaviour of a programmer that involves selecting a specific function (14) of the programming interface (12) and providing said function in the application (10) for accessing IoT data,
**characterized in that**
a function (14) that is probably relevant to the utilizer and the application (10) is a function (14) that another utilizer has already used according to the behavioural data (32) of this other utilizer,
wherein such a function (14) is automatically selected by the tool (20) on the basis of the behavioural data (32) of the other utilizer.

2. Method according to Claim 1,
wherein a function (14) that is probably relevant to the utilizer and the application (10) is a function (14) that the utilizer has already used according to the behavioural data (32),
wherein such a function (14) is automatically selected by the tool (20) on the basis of the behavioural data (32).

3. Method according to Claim 1 or 2,
wherein a function (14) that is probably relevant to the utilizer and the application (10) is a function (14) by means of which data that the utilizer has already used according to the behavioural data (32) are processible,
wherein such a function (14) is automatically selected by the tool (20) on the basis of the behavioural data (32).

4. Method according to one of Claims 1 to 3,
wherein a function (14) that is probably relevant to the utilizer and the application (10) is a function (14) by means of which data that another utilizer has already used according to the behavioural data (32) of this other utilizer are processible,
wherein such a function (14) is automatically selected by the tool (20) on the basis of the behavioural data (32) of the other utilizer.

5. Method according to one of Claims 1 to 4,
wherein the programming interface (12) is a programming interface (12) having functions (14) for accessing IoT data,
wherein the creation or use of an application (10) that uses a function (14) of the programming interface (12) involves characteristic data in this regard, namely at least behavioural data (32), being stored that encode the use of the respective function (14) and
wherein the programming interface (12) comprises a user comparison function (36) that makes at least the behavioural data (32) available to a utilizer of the programming interface (12) .

6. Method according to Claim 5,
wherein the programming interface (12) is designed such that the user comparison function (36) is callable by or for a utilizer and wherein the user comparison function (36) is callable by the utilizer with at least one parameter, which characterizes the utilizer and/or the user behaviour thereof.

7. Method according to Claim 5 or 6,
wherein the tool (20) accesses the user data (30) and/or the behavioural data (32) by calling the user comparison function (36) of the programming interface (12).

8. Programming interface (12) having functions (14) for accessing IoT data, designed to carry out a method according to one of Claims 1 to 7.

9. Computer program (20) having program code means in order to perform all the steps of any one of Claims 1 to 7 when the computer program is executed on a programming device intended to create an application (10) for accessing IoT data by means of single or multiple functions (14) that a programming interface (12) comprises.

## Revendications

1. Procédé d'assistance à un utilisateur lors d'une création d'une application (10) pour un accès à des données IoT au moyen de certaines ou de plusieurs fonctions (14) comprises par une interface (12) de programmation,
dans lequel, lors d'une création d'une application (10) ou en liaison avec la création de l'application (10), on enregistre et/ou on produit des données (30) d'usager caractéristiques de l'utilisateur et des données (32) de comportement et
dans lequel un outil (20) mis en œuvre en logiciel exploite, lors de la création de l'application (10), automatiquement les données (30) d'usager et/ou les données (32) de comportement et sur leurs bases produit et indique à l'utilisateur, comme assistance à l'utilisateur, automatiquement une proposition d'au moins une fonction (14) de l'interface (12) de programmation, qui pourrait être pertinente pour l'utilisateur et l'application (10),
dans lequel on saisit comme données (32) de comportement des données qui, lors de la création d'une application (10), sont créées par l'utilisateur et sont caractéristiques du comportement d'utilisation respectif,
dans lequel les données (32) de comportement saisies codent au moins un comportement d'un programmeur, qui consiste à choisir une fonction (14) déterminée de l'interface (12) de programmation et à la prévoir dans l'application (10) pour l'accès à des données IoT,
**caractérisé en ce que**
une fonction (14) pertinente probablement pour l'utilisateur et l'application (10) est une fonction (14) qu'un autre utilisateur a déjà utilisée en présentant les données (32) de comportement de cet autre utilisateur,
dans lequel on choisit une fonction (14) de ce genre automatiquement par l'outil (20) à l'aide des données (32) de comportement de l'autre utilisateur.

2. Procédé suivant la revendication 1,
dans lequel une fonction (14) pertinente probablement pour l'utilisateur et pour l'application (10) est une fonction (14) que l'utilisateur a déjà utilisée en présentant les données (32) de comportement,
dans lequel on choisit une fonction (14) de ce genre automatiquement par l'outil (20) à l'aide des données (32) de comportement.

3. Procédé suivant la revendication 1 ou 2,
dans lequel une fonction (14) pertinente probablement pour l'utilisateur et l'application (10) est une fonction (14) au moyen de laquelle peuvent être traitées des données que l'utilisateur a déjà utilisées en présentant les données (32) de comportement,
dans lequel on choisit une fonction (14) de ce genre automatiquement par l'outil (20) à l'aide des données (32) de comportement.

4. Procédé suivant l'une des revendications 1 à 3,
dans lequel une fonction (14) pertinente probablement pour l'utilisateur et l'application (10) est une fonction (14) au moyen de laquelle peuvent être traitées des données qu'un autre utilisateur a déjà utilisées en présentant les données (32) de comportement de cet autre utilisateur,
dans lequel on choisit une fonction (14) de ce genre automatiquement par l'outil (20) à l'aide des données (32) de comportement.

5. Procédé suivant l'une des revendications 1 à 4,
dans lequel l'interface (12) de programmation est une interface (12) de programmation ayant des fonctions (14) pour l'accès à des données IoT,
dans lequel lors de la création ou de l'utilisation d'une application (10), qui utilise une fonction (14) de l'interface (12) de programmation, on met en mémoire des données caractéristiques à cet égard, à savoir au moins des données (32) de comportement, qui codent l'utilisation de la fonction (14) respective et
dans lequel l'interface (12) de programmation comprend une fonction (36) d'égalisation des usagers, qui rend disponible au moins les données (32) de comportement pour un utilisateur de l'interface (12) de programmation.

6. Procédé suivant la revendication 2,
dans lequel l'interface (12) de programmation est constituée de manière à ce que la fonction (36) d'égalisation des usagers puisse être appelée par ou pour un utilisateur et dans lequel la fonction (36) d'égalisation des usagers peut être appelée par l'utilisateur par au moins un paramètre, qui caractérise l'utilisateur et/ou son comportement d'utilisateur.

7. Procédé suivant la revendication 5 ou 6,
dans lequel l'outil (20) pour l'accès aux données (30) d'utilisateur et/ou aux données (32) de comportement appelle la fonction (36) d'égalisation des usagers de l'interface (12) de programmation.

8. Interface (12) de programmation ayant des fonctions (14) pour l'accès à des données IoT, constituées pour l'exécution d'un procédé suivant l'une des revendications 1 à 7.

9. Programme (20) d'ordinateur ayant des moyens de code de programme pour effectuer tous les stades de l'une quelconque des revendications 1 à 7, lorsque le programme d'ordinateur est réalisé sur un appareil de programmation destiné à créer une application (10) pour un accès à des données IoT au moyen de certaines ou de plusieurs fonctions (14) comprises par une interface (12) de programmation.
